## Europäisches Patentamt

## European Patent Office

## Office européen des brevets

(11) Veröffentlichungsnummer: **0 095 443**
**B1**

(12) **EUROPÄISCHE PATENTSCHRIFT**

(45) Veröffentlichungstag der Patentschrift:
01.04.87

(51) Int. Cl.⁴: **B 60 D 1/00**

(21) Anmeldenummer: **83810221.8**

(22) Anmeldetag: **26.05.83**

(54) **Anhängeeinheit.**

(30) Priorität: **26.05.82 CH 3215/82**

(43) Veröffentlichungstag der Anmeldung:
**30.11.83 Patentblatt 83/48**

(45) Bekanntmachung des Hinweises auf die Patenterteilung:
**01.04.87 Patentblatt 87/14**

(84) Benannte Vertragsstaaten:
**AT BE CH DE FR GB IT LI LU NL SE**

(56) Entgegenhaltungen:
**EP - A - 0 016 317**
**CH - A - 365 955**
**DE - A - 2 820 529**
**DE - A - 3 122 116**
**FR - A - 1 255 203**
**US - A - 3 708 183**
**US - A - 3 865 406**
**US - A - 4 000 911**

(73) Patentinhaber: **Stillhart, Peter, CH-9601 Lülsburg SG (CH)**

(72) Erfinder: **Semenov, Vladimir, Achslenstrasse 24, CH-9016 St. Gallen (CH)**

(74) Vertreter: **Fenner, Werner, Dipl.-Ing., Patentanwalt Hofacher 374, CH-5425 Schneisingen (CH)**

ACTORUM AG

## Beschreibung

Die Erfindung betrifft eine Anhängerkupplung nach dem Oberbegriff des Patentanspruches 1.

Bei einer derartigen bekannten Anhängerkupplung nach der EP-A-0 016 317 fällt aufgrund ihrer aufwendigen Konstruktion das grosse Gewicht, vornehmlich der Tragplatte und der durch die vielen Betätigungselemente notwendige hohe Fertigungsaufwand auf. Das Unterbringen der Arretierungsbolzen und des Betätigungsmechanismus' in der Tragplatte erschwert die Wartung und den Unterhalt, durch deren Bedienungsweise die Unfallgefahr nicht gänzlich vermeidbar ist. Zur Meidung, dass sich durch eine unbeabsichtigte Betätigung des Griffes am Schwenkteil die Tragplatte mit dem Kupplungsmaul aus der Verankerung löst, ist eine zusätzliche Sicherheitsvorrichtung vorgesehen.

Aufgabe der vorliegenden Erfindung ist es somit, bei einem in vertikalen Schlitzen zweier Lochschienen an einer Tragplatte höhenverstellbaren Kupplungsmaul einer Anhängerkupplung, deren Konstruktionsaufwand und Gewicht erheblich zu reduzieren und eine Ausführung zu schaffen, die sich als fertigungsgünstig – und servicefreundlich erweist und sich durch eine einfache Bedienbarkeit auszeichnet.

Erfindungsgemäss wird diese Aufgabe durch die im Kennzeichen des Patentanspruches aufgeführten Merkmale gelöst.

Durch die gekennzeichneten Massnahmen und mittels des vom Kupplungsmaul nach oben vorstehenden Zugbolzens kann eine unerwünschte Schwenkbewegung des Griffes und die Möglichkeit eines Unfalles durch das Auslösen der Tragplatte aus der Verankerung vermieden werden.

Anschliessend wird die Erfindung anhand eines in der Zeichnung dargestellten Ausführungsbeispiels erläutert. Es zeigen:

Fig. 1 einen vertikalen Schnitt durch die erfindungsgemässe Anhängerkupplung nach der Linie I–I in Fig. 2,

Fig. 2 einen Schnitt nach der Linie II–II in Fig. 1 und

Fig. 3 einen Schnitt nach der Linie III–III in Fig. 2.

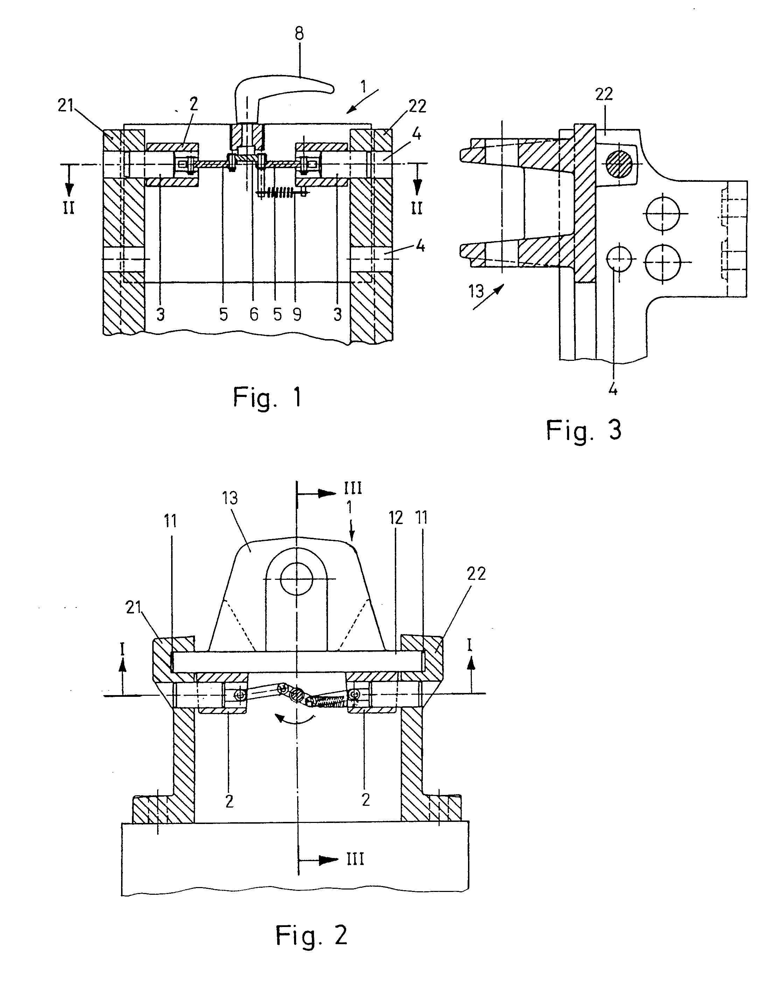

Eine in den Fig. 1 bis 3 dargestellte höhenverstellbare Anhängerkupplung 1 besteht aus zwei im Abstand nebeneinander spiegelbildlich gleichartig ausgebildeten, nach hinten ragenden Führungsplatten 21, 22, die an der Heckseite einer Zugmaschine befestigt sind. In den Führungsplatten 21, 22 ist eine in Führungsnuten 11 vertikal verschiebbar angeordnete Tragplatte 12 vorgesehen, die an ihrer Rückseite ein Kupplungsmaul 13 zur Koppelung eines Anhängefahrzeuges aufweist.

Zur stufenweisen Verstellbarkeit der Tragplatte 12, ist diese auf der dem Kupplungsmaul 13 gegenüberliegenden Seite mit in Lagern 2 quer zur Fahrtrichtung fluchtend geführten Sperrbolzen 3 versehen, die mittels eines Betätigungsorgans 8 eines um eine vertikale Achse antreibbaren Hebelgetriebes 5, 6 aus einer Arretierstellung, in der sie jeweils in eine der Verankerungsbohrungen 4 der Führungsplatten 21, 22 hineinragen, in eine Verschiebestellung, in der sie aus den Verankerungsbohrungen 4 herausgezogen sind, axial verschiebbar sind. Zu diesem Zweck weist das Hebelgetriebe einen mit dem Betätigungsorgan 8 verbundenen Doppelhebel 6 auf, dessen freie Enden an den jeweils mit den Sperrbolzen 3 gelenkig verbundenen Lenkern 5 angelenkt sind.

Durch Verdrehen des Betätigungsorgans 8 und Doppelhebels 6 werden die Sperrbolzen 3 mittels der Lenker 5 aus den Verankerungsbohrungen 4 der Führungsplatten 21, 22 herausgezogen; das an der Tragplatte 12 vorgesehene Kupplungsmaul 13 kann nun bei zurückgezogenem Sperrbolzen 3 in seiner Höhenlage verstellt werden. Sobald die gewählte Position erreicht ist, kann durch eine dem Entriegeln der Sperrbolzen 3 entgegengerichtete Drehbewegung des Betätigungsorgans 8 die Tragplatte 12 des Kupplungsmauls 13 arretiert werden. Dieser Vorgang kann auch wie in den Fig. 1 und 2 gezeigt mittels einer direkt einwirkenden Feder 9, die zwischen dem Doppelhebel 6 und der Tragplatte 12 eingespannt ist, als selbsttätig sichernd durchgeführt werden.

## Patentansprüche

1. Höhenverstellbare Anhängerkupplung (1) für Fahrzeuge, bestehend aus einer mit einem Kupplungsmaul (13) fest verbundenen Tragplatte (12), die an zwei in seitlichem Abstand zueinander fahrzeugfest angeordneten Führungsplatten (21, 22) in vertikalen Führungsnuten (11) verstellbar und in den verschiedenen Stufen mittels Sperrbolzen (3) arretierbar ist, wobei die Sperrbolzen (3) fluchtend geführt und quer zur Fahrtrichtung in Lagern (2) angeordnet und mittels eines Betätigungsorgans (8) eines um eine Achse antreibbaren Hebelgetriebes (5, 6) aus einer Arretierstellung, in der sie jeweils in eine der Verankerungsbohrungen (4) der Führungsplatten (21, 22) hineinragen, in eine Verschiebestellung, in der sie aus den Verankerungsbohrungen (4) herausgezogen sind, verschiebbar sind, dadurch gekennzeichnet, dass die jeweils einer Verankerungsbohrung (4) der Führungsplatten (21, 22) zugeordneten Sperrbolzen (3) an der Rückseite der in Führungsnuten (11) verschiebbaren Tragplatte (12) angeordnet sind und dass die Achse, um die das Hebelgetriebe (5, 6) antreibbar ist, vertikal angeordnet ist.

2. Anhängerkupplung nach Anspruch 1, dadurch gekennzeichnet, dass zur Rückstellbewegung der Sperrbolzen (3) eine zwischen einem Ende des Doppelhebels (6) und der Tragplatte (12) eingespannte Feder (9) vorgesehen ist.

## Claims

1. Height-adjustable trailer coupling (1) for vehicles, consisting of a carrier plate (12) which is firmly connected to a coupling mouth (13) and is displaceable on two laterally spaced-apart guide plates (21, 22) fixed to the vehicle in vertical guiding grooves (11) and is lockable at different levels by locking bolts (3), the locking bolts (3) being guided in alignment and arranged transversely to the direction of driving in bearings (2) and being displaceable by an actuating member (8) of a lever train (5, 6) rotatable about an axis from a locking position, in which they engage each into one of the locking holes (4) in the guide plates (21, 22), to a displacement position, in which they are withdrawn from the locking holes (4), characterised in that the locking bolts (3), each of which is associated with one of the locking holes (4) in the guide plate (21, 22), are situated on the rear side of the carrier plate (12) displaceable in the guide grooves (11) and that the axis about which the lever train (5, 6) may be rotated is vertical.

2. Trailer coupling according to claim 1, characterised in that a spring (9) is provided for the resetting motion of the locking bolts (3), the spring being fixed between one end of the two-armed lever (6) and the carrier plate (12).

**Revendications**

1. Accouplement de remorque (1) réglable en hauteur pour véhicules, formé d'une plaque porteuse (12) reliée solidairement à une fourche d'accouplement (13), qui peut être réglée dans des rainures verticales de guidage (11) sur deux plaques de guidage (21, 22) disposées de façon solidaire du véhicule avec espacement latéral entre elles et qui peut être arrêté aux différents stades au moyen de goujons de blocage (3), les goujons de blocage (3) étant guidés de façon alignée et disposés transversalement à la direction de marche dans des coussinets (2) et pouvant être amenés à coulisser, au moyen d'un organe d'actionnement (8) d'un tringlage (5, 6) pouvant être entraîné autour d'un axe, d'une position d'arrêt dans laquelle ils pénètrent chacun dans l'une des perforations d'ancrage (4) des plaques de guidage (21, 22), à une position de coulissement dans laquelle ils sont retirés des perforations d'ancrage (4), caractérisé par le fait que les goujons de blocage (3) adjoints chacun à une perforation d'ancrage (4) des plaques de guidage (21, 22) sont disposés à l'arrière de la plaque porteuse (12) pouvant coulisser dans des rainures de guidage (11) et que l'axe autour duquel le tringlage (5, 6) peut être entraîné est disposé verticalement.

2. Accouplement de remorque selon la revendication 1, caractérisé par le fait que pour le mouvement de rappel des goujons de blocage (3) est prévu un ressort (9) tendu entre une extrémité du levier double (6) et la plaque porteuse (12).

Fig. 1

Fig. 3

Fig. 2